# EUROPEAN PATENT SPECIFICATION

(11) **EP 1 964 864 B1**
(45) Date of publication and mention of the grant of the patent: **09.12.2009**
(21) Application number: 08151672.6
(22) Date of filing: 20.02.2008
(51) Int. Cl.: C08F 210/16, C08F 210/18, C08J 9/16, C08J 3/24

(54) **Ethylene-Propylene-Diene Rubber Foamed Material**
Ethylen-Propylen-Dien-Gummi-Schaumstoffmaterial
Matériau mousse de caoutchouc éthylène-propylène-diène

(30) Priority: 27.02.2007 JP 2007047433
(43) Date of publication of application: 03.09.2008
(73) Proprietor: NITTO DENKO CORPORATION, Ibaraki-shi, Osaka 567-8680 (JP)
(72) Inventor: Suzuki, Hiroaki, Ibaraki-shi Osaka 567-8680 (JP); Takahashi, Nobuyuki, Ibaraki-shi Osaka 567-8680 (JP); UI, Takehiro, Ibaraki-shi Osaka 567-8680 (JP)
(74) Representative: Schwabe - Sandmair - Marx

(56) References cited:
- EP-A- 1 605 015
- EP-A- 1 683 827
- US-A- 5 245 084
- US-A- 5 292 791

## Description

### BACKGROUND OF THE INVENTION

### Field of the Invention

The present invention relates to an ethylene-propylene-diene rubber foamed material. More specifically, the present invention relates to an ethylene-propylene-diene rubber foamed material suitably used as sealing materials for a variety of industrial products.

### Description of Related Art

Conventionally, ethylene-propylene-diene rubber foamed materials obtained by foaming an ethylene-propylene-diene rubber (hereinafter abbreviated as EPDM in some cases) have been known as sealing materials for a variety of industrial products.

In general, an EPDM foamed material is produced by foaming EPDM with a foaming agent, and cross-linking the EPDM with sulfur (cf. for example, Japanese Unexamined Patent Publication No. 2006-182796).

As is also known, an EPDM foamed material is produced by foaming EPDM with a foaming agent, and cross-linking the EPDM with an organic peroxide (cf. for example, Japanese Unexamined Patent Publication No. 2002-179825).

### SUMMARY OF THE INVENTION

However, when EPDM is cross-linked with sulfur, depending on the type of member to be sealed, some sulfur remaining in the obtained EPDM foamed material may corrode the member.

Further, when EPDM is cross-linked with an organic peroxide cross-linking agent under the presence of oxygen, the cross-linking on the surface of the EPDM foamed material thus obtained is insufficient, so that the surface thereof may become tacky.

An object of the present invention is to provide an EPDM foamed material with reduced corrosion and a less tacky surface, as well as having high foaming ability and excellent in flexibility.

The present invention provides an ethylene-propylene-diene rubber foamed material obtained by foaming a rubber composition containing ethylene-propylene-diene rubber, a quinoid cross-linking agent, and an organic peroxide cross-linking agent.

In the ethylene-propylene-diene rubber foamed material of the present invention, it is preferable that the content of diene in the ethylene-propylene-diene rubber is in the range of 3 to 20% by weight.

In the ethylene-propylene-diene rubber foamed material of the present invention, it is preferable that the quinoid cross-linking agent contains preferably p-quinonedioxime, or more preferably p,p'-dibenzoyl quinonedioxime. Further, it is preferable that p-quinonedioxime is contained in an amount of 0.05 to 2 parts by weight based on 100 parts by weight of the ethylene-propylene-diene rubber, and that p,p'-dibenzoyl quinonedioxime is contained in an amount of 0.05 to 10 parts by weight based on 100 parts by weight of the ethylene-propylene-diene rubber.

In the ethylene-propylene-diene rubber foamed material of the present invention, it is preferable that the organic peroxide cross-linking agent contains an organic peroxide cross-linking agent having a 1 minute half-life temperature over 160°C.

In the ethylene-propylene-diene rubber foamed material of the present invention, it is preferable that the organic peroxide cross-linking agent is contained in an amount of 0.05 to 20 parts by weight based on 100 parts by weight of the ethylene-propylene-diene rubber.

In the ethylene-propylene-diene rubber foamed material of the present invention, it is preferable that the rubber composition further contains thiazoles and thioureas as a cross-linking accelerator.

In the EPDM foamed material of the present invention, the quinoid cross-linking agent and the organic peroxide cross-linking agent are used in combination as a cross-linking agent. This can reduce corrosion, as compared with the case of using sulfur as a cross-linking agent. The combination use of the quinoid cross-linking agent and the organic peroxide cross-linking agent can ensure sufficient crosslinking on the surface of the EPDM foamed material, thereby reducing tackiness on the surface thereof. Further, the EPDM foamed material of the present invention can ensure the same level of high foaming ability and excellent in flexibility as the case of using sulfur for crosslinking.

### DETAILED DESCRIPTION OF PREFERRED EMBODIMENTS

The EPDM foamed material of the present invention can be obtained by foaming a rubber composition containing EPDM, a quinoid cross-linking agent, and an organic peroxide cross-linking agent.

EPDM is a rubber obtained by copolymerization of ethylene, propylene, and dienes. The copolymerization of dienes, in addition to ethylene and propylene, allows introduction of an unsaturated bond, thereby enabling crosslinking of the EPDM with a cross-linking agent.

The dienes that may be used include, for example, 5-ethylidene-2-norbornene, 1,4-hexadiene, and dicyclopentadiene.

According to the present invention, the content of dienes (diene content) in EPDM is in the range of, for example, 3 to 20% by weight, preferably 9 to 20% by weight, or more preferably 9 to 12% by weight. A lower content of dienes than this range may cause surface shrinkage on the obtained EPDM foamed material. Conversely, a higher content of dienes than this range may produce a crack in the EPDM foamed material.

The EPDM has a Mooney viscosity (ML1+4, 100°C) in the range of, for example, 20 to 150, or preferably 30 to 80.

The quinoid cross-linking agent that may be used is an organic compound having a quinoid structure, and includes, for example, p-quinonedioxime, p,p'-dibenzoyl quinonedioxime, and poly-p-dinitroso benzene. Preferably p-quinonedioxime and p,p'-dibenzoyl quinonedioxime, or more preferably p-quinonedioxime are/is used as the quinoid cross-linking agent.

These quinoid cross-linking agents may be used alone or in combination of two or more kinds. Preferably, p-quinonedioxime and p,p'-dibenzoyl quinonedioxime are used in combination. The combination use of p-quinonedioxime and p,p'-dibenzoyl quinonedioxime can ensure a good foam shape of the obtained EPDM foamed material.

The mixing ratio of the quinoid cross-linking agent is in the range of, for example, 0.01 to 20 parts by weight, preferably 0.05 to 15 parts by weight, or more preferably 0.1 to 12 parts by weight, based on 100 parts by weight of EPDM. Specifically, in the case of using p-quinonedioxime, the mixing ratio of the p-quinonedioxime is in the range of, for example, 0.05 to 2 parts by weight, or preferably 0.1 to 1 parts by weight, based on 100 parts by weight of EPDM. In the case of using p,p'-dibenzoyl quinonedioxime, the mixing ratio of the p,p'-dibenzoyl quinonedioxime is in the range of, for example, 0.05 to 10 parts by weight, or preferably 0.5 to 7 parts by weight, based on 100 parts by weight of EPDM.

In the case of using p-quinonedioxime and p,p'-dibenzoyl quinonedioxime in combination, the weight ratio of p,p'-dibenzoyl quinonedioxime to p-quinonedioxime (p,p'-dibenzoyl quinonedioxime/p-quinonedioxime) is in the range of, for example, 0.25 to 50, preferably 1.1 to 40, or more preferably 5 to 30.

The organic peroxide cross-linking agent is an organic compound having a peroxide structure. Preferably an organic peroxide cross-linking agent having a 1-minute half-life temperature over 160°C, more preferably an organic peroxide cross-linking agent having a 1-minute half-life temperature of 200°C or less, or even more preferably an organic peroxide cross-linking agent having a 1-minute half-life temperature in the range of 170 to 190°C is used. Specifically, the organic peroxide cross-linking agents that may be used include dicumyl peroxide (1-minute half-life temperature: 175°C), dimethyldi(t-butylperoxy)hexane (1-minute half-life temperature: 180°C), and bis(t-butylperoxy isopropyl) benzene (1-minute half-life temperature: 175°C). Preferably, dicumyl peroxide is used. These organic peroxide cross-linking agents may be used alone or in combination of two or more kinds.

The mixing ratio of the organic peroxide cross-linking agent is in the range of, for example, 0.05 to 20 parts by weight, or preferably 0.2 to 5 parts by weight, based on 100 parts by weight of EPDM.

The rubber composition contains a foaming agent for foaming EPDM. The foaming agents that may be used include an organic foaming agent and an inorganic foaming agent.

The organic foaming agents that may be used include, for example, azo foaming agents, such as azodicarbonamide (ADCA), barium azodicarboxylate, azobisisobutyronitrile (AIBN), azocyclohexylnitrile, and azodiaminobenzene; N-nitroso foaming agents, such as N,N'-dinitrosopentamethylenetetramine (DTP), N,N'-dimethyl-N,N'-dinitroso terephthalamide, and trinitrosotrimethyltriamine; hydrazide foaming agents, such as 4,4'-oxybis(benzenesulphonyl hydrazide) (OBSH), paratoluene sulfonylhydrazide, diphenyl sulfone-3,3'-disulfonylhydrazide, 2,4-toluene disulfonylhydrazide, p,p-bis(benzenesulfonyl hydrazide) ether, benzene-1,3-disulfonylhydrazide, and allylbis(sulfonylhydrazide); semicarbazide foaming agents, such as p-toluylenesulfonyl semicarbazide and 4,4'-oxybis(benzenesulfonyl semicarbazide); fluoroalkane foaming agents, such as trichloromonofluoromethane and dichloromonofluoromethane; triazole foaming agents, such as 5-morphoryl-1,2,3,4-thiatriazole; and other known organic foaming agents. The organic foaming agents that may be used also include thermally expansible microparticles containing microcapsules in which thermally expansive material is encapsulated. Commercially available products, such as Microsphere (trade name, available from Matsumoto Yushi-Seiyaku Co., Ltd.) may be used as the thermally expansible microparticles.

The inorganic foaming agents that may be used include, for example, hydrogencarbonate, such as sodium hydrogencarbonate and ammonium hydrogencarbonate; carbonate, such as sodium carbonate and ammonium carbonate; nitrite, such as sodium nitrite and ammonium nitrite; boron hydride salts, such as sodium borohydride; azides; and other known inorganic foaming agents. Preferably, the azo foaming agents are used. These foaming agents may be used alone or in combination of two or more kinds.

The mixing ratio of the foaming agent is in the range of, for example, 0.1 to 50 parts by weight, or preferably 1 to 30 parts by weight, based on 100 parts by weight of EPDM.

The rubber composition properly contains a cross-linking accelerator and a foaming accelerator as required. The cross-linking accelerators that may be used include, for example, thiazoles (e.g., dibenzothiazyl disulfide, 2-mercaptobenzothiazole, etc.), thioureas (e.g., diethyl thiourea, trimethyl thiourea, dibutyl thiourea, etc.), dithiocarbamic acids (e.g., sodium dimethyldithiocarbamate, sodium diethyldithiocarbamate, zinc dimethyldithiocarbamate, zinc diethyldithiocarbamate, etc.), guanidines (e.g., diphenylguanidine, di-o-tolylguanidine, etc.), sulfenamides (e.g., benzothiazyl-2-diethylsulfenamide, N-cyclohexyl-2-benzothiazyl sulfenamide, etc.), thiurams (e.g., tetramethylthiurammonosulfide, tetramethylthiuramdisulfide, etc.), xanthogenic acids (e.g., sodium isopropylxanthogenate, zinc isopropylxanthogenate, etc.), and aldehyde ammonias (e.g., acetaldehyde ammonia, hexamethylenetetramine, etc.), aldehyde amines (e.g., n-butyraldehydeaniline, butyraldehyde monobutylamine, etc.). Preferably, thiazoles and thioureas are used.

These cross-linking accelerators may be used alone or in combination of two or more kinds. Preferably, thiazoles and thioureas are used in combination. The combination use of these aids can ensure a good foam shape and flexibility of the obtained EPDM foaming material.

The mixing ratio of the cross-linking accelerator is in the range of, for example, 0.01 to 20 parts by weight, preferably 0.02 to 10 parts by weight, or more preferably 0.06 to 4 parts by weight, based on 100 parts by weight of EPDM. Specifically, in the case of using thiazoles, the mixing ratio of the thiazoles is in the range of, for example, 0.01 to 5 parts by weight, or preferably 0.5 to 3 parts by weight, based on 100 parts by weight of EPDM. In the case of using thioureas, the mixing ratio of the thioureas is in the range of, for example, 0.01 to 5 parts by weight, or preferably 0.1 to 1 parts by weight, based on 100 parts by weight of EPDM.

Further, in the case of using thiazoles and thioureas in combination, the weight ratio of the thioureas to the thiazoles (thioureas/thiazoles) is in the range of, for example, 0.1 to 10, or preferably 0.2 to 0.9.

The foaming accelerators that may be used include, for example, a urea foaming accelerator, a salicylic acid foaming accelerator, and a benzoic acid foaming accelerator. Preferably, the urea foaming accelerator is used. These foaming accelerators may be used alone or in combination of two or more kinds.

The mixing ratio of the foaming accelerator is in the range of, for example, 0.5 to 20 parts by weight, or preferably 1 to 10 parts by weight, based on 100 parts by weight of EPDM.

The rubber composition can also properly contain a polymer other than EPDM, a processing aid, a pigment, a filler, a softening agent, and the like as required.

The polymers other than EPDM, which may be used, include, for example, a rubber polymer and a non-rubber polymer. The rubber polymers that may be used include, for example, a rubber copolymer comprising a component of a cyclic or non-cyclic polyene having a non-conjugated double bonds (e.g., α-olefin-dicyclopentadiene, such as butene-1, ethylidene norbornene, etc.), ethylene-propylene rubber, silicone rubber, fluorine rubber, acrylic rubber, polyurethane rubber, polyamide rubber, natural rubber, polyisobutylene rubber, polyisoprene rubber, chloroprene rubber, butyl rubber, nitrile butyl rubber, styrene-butadiene rubber, styrene-butadiene-styrene rubber, styrene-isoprene-styrene rubber, styrene-ethylene-butadiene rubber, styrene-ethylene-butylene-styrene rubber, styrene-isoprene-propylene-styrene rubber, and chlorosulfonated polyethylene rubber.

The non-rubber polymers that may be used include, for example, polyethylene, polypropylene, acrylic polymer (e.g., poly(meta)acrylic acid alkyl ester, etc.), polyvinyl chloride, ethylene-vinyl acetate copolymers, polyvinyl acetate, polyamide, polyester, chlorinated polyethylene, urethane polymers, styrene polymers, silicone polymers, and epoxy resins. Preferably non-rubber polymer, or more preferably polyethylene is used. These polymers other than EPDM may be used alone or in combination of two or more kinds.

The mixing ratio of the polymer other than EPDM is, for example, 100 parts by weight or less, or preferably 50 parts by weight or less, and usually 1 part by weight or more, based on 100 parts by weight of EPDM.

The processing aids that may be used include, for example, stearic acid and esters thereof, and zinc oxide. These processing aids may be used alone or in combination of two or more kinds. The mixing ratio of the processing aid is in the range of, for example, 0.1 to 20 parts by weight, or preferably 1 to 10 parts by weight, based on 100 parts by weight of EPDM.

The pigments that may be used include, for example, carbon black. These pigments may be used alone or in combination of two or more kinds. The mixing ratio of the pigment is in the range of, for example, 1 to 50 parts by weight, or preferably 2 to 30 parts by weight, based on 100 parts by weight of EPDM.

The fillers that may be used include, for example, inorganic fillers, such as calcium carbonate, magnesium carbonate, calcium hydroxide, magnesium hydroxide, aluminium hydroxide, silicic acid and salts thereof, clay, talc, mica powder, bentonite, silica, alumina, aluminium silicate, acetylene black, and aluminium powder; organic fillers, such as cork; and other known fillers. These fillers may be used alone or in combination of two or more kinds. The mixing ratio of the filler is in the range of, for example, 10 to 300 parts by weight, preferably 50 to 200 parts by weight, or more preferably 100 to 200 parts by weight, based on 100 parts by weight of EPDM.

The softening agents that may be used include, for example, petroleum oils (e.g., paraffin-based process oil (paraffin oil, etc.), naphthene-based process oil, drying oils or animal and vegetable oils (e.g., linseed oil, etc.), aromatic process oil, etc.), asphalt, low molecular weight polymers, organic acid esters (e.g., phthalic ester (e.g., di-2-octyl phthalate (DOP), dibutyl phthalate (DBP)), phosphate, higher fatty acid ester, alkyl sulfonate ester, etc.), and thickeners. Preferably petroleum oils, or more preferably paraffin-based process oil is used. These softening agents may be used alone or in combination of two or more kinds. The mixing ratio of the softening agent is in the range of, for example, 10 to 60 parts by weight, or preferably 20 to 50 parts by weight, based on 100 parts by weight of EPDM.

Further, depending on the purpose and application, the rubber composition can properly contain known additives, such as, for example, a fire retardant, a plasticizer, an antiaging agent, an antioxidant, a coloring agent, and a mildewproofing agent, within the range of not affecting the excellent effect of the EPDM foamed material to be obtained.

The rubber composition is prepared in the form of admixture by properly mixing each above-mentioned component and kneading the mixture using a kneader, a mixer, or a mixing roll and the like. During the kneading, the mixture may also be properly heated. Alternatively, kneading can be performed by first kneading components other than additive components to be added in small amounts, such as, for example, a cross-linking agent, a foaming agent, a cross-linking accelerator, and a foaming accelerator, and then adding the additive components to the kneaded mixture.

Then, the rubber composition thus prepared is foamed, so that an EPDM foamed material can be obtained. The method for foaming a rubber composition is not particularly limited thereto and a known method is used. For example, the admixture can be formed into the form of a sheet using a calender, an extruder, or the like, and then be foamed. Alternatively, the admixture can be formed into a complex shape, such as an uneven shape, by injection molding, press forming, or other forming method, and then be foamed.

The heating temperature for foaming is properly selected, for example, depending on the cross-linking starting temperature of the cross-linking agent to be mixed, or the foaming temperature of the foaming agent to be mixed. For example, the heating temperature is 450°C or less, preferably 100 to 350°C, or more preferably 120 to 250°C.

This foaming causes the admixture to be crosslinked with foaming, so that an EPDM foamed material is formed.

A foaming ratio (density ratio before and after foaming) of the EPDM foamed material thus obtained is, for example, 10 times or more, or preferably 15 times or more, and usually 30 times or less. The EPDM foamed material has a density in the range of, for example, 0.04 to 0.20 g/cm³, or preferably 0.04 to 0.15 g/cm³. The EPDM foamed material has a 25% compressive load value in the range of 0.05 to 5.0 N/cm², or preferably 0.05 to 3.0 N/cm² from the viewpoint of flexibility.

In the EPDM foamed material, the quinoid cross-linking agent and the organic peroxide cross-linking agent are used in combination as a cross-linking agent. This can reduce corrosion, compared with the case of using sulfur as a cross-linking agent. The combination use of the quinoid cross-linking agent and the organic peroxide cross-linking agent can ensure sufficient crosslinking on the surface of the EPDM foamed material, thereby reducing tackiness on the surface thereof. Further, the EPDM foamed material of the present invention can ensure the same level of high foaming ability and flexibility as the case of using sulfur for crosslinking.

Hence, the EPDM foamed material of the present invention can be suitably used as the sealing members for industrial products that need sealing including, for example, automobiles, electric and electronic products, and housing products, to seal up spaces between members or parts of those products, the sealing members including, for example, exterior sealing material of automobiles, sealing material of electric and electronic products, and sealing material of housings, in the form of dust-proof material, heat insulating material, noise insulation material, vibration-proof material, cushioning material, filling material, and water shutoff material, for the purposes of dust proof, heat insulation, noise reduction, damping, shock-absorbing, and water tight and air tight.

### EXAMPLES

While in the following, the present invention will be described in further detail with reference to Examples and Comparative Examples, the present invention is not limited to any of them.

### 1) Preparation of Examples and Comparative Examples

In the blending formulation shown in TABLE 1, first, EPDM, another polymer, a processing aid, a pigment, a filler, a softening agent, and an N,N'-dibutyl thiourea were blended. The blended mixture was kneaded with a 3L pressurizing kneader to prepare a primary admixture.

A cross-linking agent, a cross-linking accelerator (except an N,N'-dibutyl thiourea), a foaming agent, and a foaming accelerator were blended separately. The blended mixture was then blended with the primary admixture, and the resulting mixture was kneaded with a 10-inch mixing roll to prepare a secondary admixture (rubber composition).

Thereafter, the rubber composition was extruded into a sheet-like shape having a thickness of about 10 mm using a single-screw extruder (45mmΦ). The resulting sheet was then cut into a piece having a width of 100 mm and a length of 100 mm to produce a sheet.

The cut sheet was then preheated in a hot air circulation type oven at 100°C for 10 minutes. Thereafter, the sheet was heated up to 160°C for 15 minutes, and then kept heated at 160°C for 15 minutes to foam the sheet, so that an EPDM foamed material was obtained.

### 2) Evaluation

The following data on the obtained EPDM foamed materials were evaluated. These evaluations were carried out for all Examples and Comparative Examples. The results are shown in TABLE 1.

### (Silver Corrosion)

After 0.5 g of the EPDM foamed material was put into a 100-mL sealed bottle, a polished and washed silver (in plate form) was affixed to the inside of a lid of the sealed bottle. This bottle was placed in an 85°C thermostat oven for seven days, and the presence or absence of silver corrosion was then examined. The case where corrosion was not observed was evaluated as "A (absent)," and the case where corrosion was observed was evaluated as "P (present)".

### (Surface Tack)

The surface of the EPDM foamed material was touched with fingers, and the presence or absence of surface tack was then examined. The case where the surface thereof was not tacky to the touch was evaluated as "A (absent)," and the case where the surface thereof was tacky to the touch was evaluated as "P (present)".

### (Foam Shape)

The visual observation of the outside shape of the EPDM foamed material was carried out. The case where insufficient crosslinking was clearly observed was evaluated as "XX", the case where cracking appeared was evaluated as "X", the case where surface shrinkage appeared was evaluated as "Δ", and the case where good appearance without cracking or surface shrinkage was observed was evaluated as "O".

### (25% Compressive Load Value)

Skin layers on the upper side and the lower side of the EPDM foamed material were removed to produce a 10-mm-thick test piece. Thereafter, the piece was compressed at a compression rate of 10 mm/min using a compression testing machine, in conformity with the compressive load test of JISK6767. At ten seconds after the compression, the compressive load was read to obtain a compressive load value.

### (Density)

Skin layers on the upper side and the lower side of the EPDM foamed material were removed to produce a 10-mm-thick test piece. Thereafter, the weight of the piece was measured to determine the weight per unit volume of the piece by calculation.

**TABLE 1**

| Examples/ Comparative Examples | | Examples | | | | | | | | | Comparative Examples | | |
|---|---|---|---|---|---|---|---|---|---|---|---|---|---|
| | | 1 | 2 | 3 | 4 | 5 | 6 | 7 | 8 | 9 | 1 | 2 | 3 |
| Blending Prescription (parts by weight) | | 100 | - | - | 100 | 100 | 100 | 100 | 100 | 100 | 100 | 100 | |
| EPDM | A (Diene: 9.5%) | | | | | | | | | | | | |
| | B (Diene: 8%) | - | 100 | - | - | - | - | - | - | - | - | - | |
| | C (Diene: 4%) | - | - | 100 | - | - | - | - | - | - | - | - | *Sulfur Blending Formulation |
| Other Polymers | Polyethylene | 20 | 20 | 20 | 20 | 20 | 20 | 20 | - | 20 | 20 | 20 | |
| Processing Aid Processing Aid | Stearic Acid | 3 | 3 | 3 | 3 | 3 | 3 | 3 | 3 | 3 | 3 | 3 | |
| | Zinc Oxide | 5 | 5 | 5 | 5 | 5 | 5 | 5 | 5 | 5 | 5 | 5 | |
| Pigment | Carbon Black | 10 | 10 | 10 | 10 | 10 | 10 | 10 | 10 | 10 | 10 | 10 | |
| Filler | Calcium Carbonate | 150 | 150 | 150 | 150 | 150 | 150 | 150 | 150 | 150 | 150 | 150 | |
| Softening Agent Cross-linking Agent | Paraffin Oil | 35 | 35 | 35 | 35 | 35 | 35 | 35 | 35 | 35 | 35 | 35 | |
| | p-Quinonedioxime | 0.2 | 0.2 | 0.2 | 0.2 | 0.2 | 3 | 0.2 | 0.2 | 0.2 | - | 0.2 | |
| | p,p'-Dibenzoyl Quinonedioxime | 1 | 1 | 1 | 1 | 6 | 1 | - | 1 | 1 | - | 1 | |
| | PERCUMYL D-40 | 1 | 1 | 1 | 11 | 1 | 1 | 1 | 1 | 1 | 1 | - | |
| Cross-linking Accelerator | Dibenzothiazyl Disulfide | 1 | 1 | 1 | 1 | 1 | 1 | 1 | 1 | 1 | 1 | 1 | |
| | N,N'-Dibutyl Thiourea | 0.5 | 0.5 | 0.5 | 0.5 | 0.5 | 0.5 | 0.5 | 0.5 | - | 0.5 | 0.5 | |
| Foaming Agent Foaming Accelerator | Azodicarbonamide | 20 | 20 | 20 | 20 | 20 | 20 | 20 | 20 | 20 | 20 | 20 | |
| | Urea Foaming Aid | 5 | 5 | 5 | 5 | 5 | 5 | 5 | 5 | 5 | 5 | 5 | |
| Evaluation Silver Corrosion | | A | A | A | A | A | A | A | A | A | A | A | P |
| Surface Tack | | A | A | A | A | A | A | A | A | A | P | A | A |
| Foam Shape | | ○ | Δ | Δ | ○ | ○ | Δ | Δ | ○ | Δ | XX | X | ○ |
| 25% Compressive Load Value (N/cm²) | | 0.847 | 0.224 | 0.691 | 0.793 | 0.620 | N/A | 0.729 | 0.477 | 0.450 | N/A | 0.696 | 0.72 |
| Density (g/cm²) | | 0.0683 | 0.0761 | 0.0654 | 0.0658 | 0.0624 | 0.820 | 0.0741 | 0.0713 | 0.1093 | 0.545 | 0.0698 | 0.080 |

| | | | | | | | | | | | | | |
|---|---|---|---|---|---|---|---|---|---|---|---|---|---|
| A= Absent, P= Present, N/A = Not available | | | | | | | | | | | | | |

The details in TABLE 1 are shown below.
EPDM A: Esprene 505A (diene content: 9.5% by weight) available from Sumitomo Chemical Co., Ltd.
EPDM B: EPT 4045 (diene content: 8.0%) available from Sumitomo Chemical Co., Ltd.
EPDM C: Esprene 501A (diene content: 4% by weight) available from Sumitomo Chemical Co., Ltd.
p-Quinonedioxime: Available from Ouchi Shinko Chemical Industrial Co., Ltd.
p,p'-Dibenzoyl quinonedioxime: Available from Ouchi Shinko Chemical Industrial Co., Ltd.
PERCUMYL D-40: 40% by weight of dicumyl peroxide powder, available from Nippon Oil and Fats Co., Ltd.
Dibenzothiazyl disulfide: Available from Ouchi Shinko Chemical Industrial Co., Ltd.
N,N'-Dibutyl thiourea: Available from Ouchi Shinko Chemical Industrial Co., Ltd. Sulfur Blending Formulation: 1.2 parts by weight of sulfur, 1.0 part by weight of NOCCELER PZ (zinc dimethyldithiocarbamate, available from Ouchi Shinko Chemical Industrial Co., Ltd.), 1.0 part by weight of NOCCELER EZ (zinc diethyldithiocarbamate, available from Ouchi Shinko Chemical Industrial Co., Ltd.), 1.2 part by weight of NOCCELER M (2-mercaptobenzothiazole, available from Ouchi Shinko Chemical Industrial Co., Ltd.), and azodicarbonamide were blended. This blended mixture was added to the primary admixture described above, and the resulting mixture was kneaded with a 10-inch mixing roll to prepare a secondary admixture (rubber composition). Thereafter, in the same manner as above, a sheet was produced and then foamed to give a sulfur-vulcanized EPDM foamed material (Comparative Example 3).

## Claims

1. An ethylene-propylene-diene rubber foamed material obtained by foaming a rubber composition comprising an ethylene-propylene-diene rubber, a quinoid cross-linking agent, and an organic peroxide cross-linking agent.

2. The ethylene-propylene-diene rubber foamed material according to claim 1, wherein the content of dienes in the ethylene-propylene-diene rubber is in the range of 3 to 20% by weight.

3. The ethylene-propylene-diene rubber foamed material according to claim 1, wherein the quinoid cross-linking agent comprises p-quinonedioxime.

4. The ethylene-propylene-diene rubber foamed material according to claim 3, wherein the quinoid cross-linking agent further comprises p,p'-dibenzoyl quinonedioxime.

5. The ethylene-propylene-diene rubber foamed material according to claim 3, wherein p-quinonedioxime is contained in an amount of 0.05 to 2 parts by weight based on 100 parts by weight of the ethylene-propylene-diene rubber.

6. The ethylene-propylene-diene rubber foamed material according to claim 4, wherein p,p'-dibenzoyl quinonedioxime is contained in an amount of 0.05 to 10 parts by weight based on 100 parts by weight of the ethylene-propylene-diene rubber.

7. The ethylene-propylene-diene rubber foamed material according to claim 1, wherein the organic peroxide cross-linking agent comprises an organic peroxide cross-linking agent having a 1 minute half-life temperature over 160°C.

8. The ethylene-propylene-diene rubber foamed material according to claim 1, wherein the organic peroxide cross-linking agent is contained in an amount of 0.05 to 20 parts by weight based on 100 parts by weight of the ethylene-propylene-diene rubber.

9. The ethylene-propylene-diene rubber foamed material according to claim 1, wherein the rubber composition further comprises thiazoles and thioureas as a cross-linking accelerator.

10. The ethylene-propylene-diene rubber foamed material according to claim 1, wherein the rubber composition further comprises an azo foaming agent.

## Patentansprüche

1. Geschäumtes Ethylen-Propylen-Diengummimaterial, erhalten durch Schäumen einer Kautschukzusammensetzung, umfassend einen Ethylen-Propylen-Dienkautschuk, ein chinoides Vernetzungsmittel und ein organisches Peroxid-Vernetzungsmittel.

2. Geschäumtes Ethylen-Propylen-Diengummimaterial gemäß Anspruch 1, wobei der Gehalt der Diene in dem Ethylen-Propylen-Dienkautschuk im Bereich von 3 bis 20 Gew.-% liegt.

3. Geschäumtes Ethylen-Propylen-Diengummimaterial gemäß Anspruch 1, wobei das chinoide Vernetzungsmittel p-Chinondioxim umfasst.

4. Geschäumtes Ethylen-Propylen-Diengummimaterial gemäß Anspruch 3, wobei das chinoide Vernetzungsmittel ferner p,p'-Dibenzoylchinondioxim umfasst.

5. Geschäumtes Ethylen-Propylen-Diengummimaterial gemäß Anspruch 3, wobei p-Chinondioxim in einer Menge von 0,05 bis 2 Gewichtsteilen, bezogen auf 100 Gewichtsteile des Ethylen-Propylen-Dienkautschuks, enthalten ist.

6. Geschäumtes Ethylen-Propylen-Diengummimaterial gemäß Anspruch 4, wobei p,p'-Dibenzoylchinondioxim in einer Menge von 0,05 bis 10 Gewichtsteilen, bezogen auf 100 Gewichtsteile des Ethylen-Propylen-Dienkautschuks, enthalten ist.

7. Geschäumtes Ethylen-Propylen-Diengummimaterial gemäß Anspruch 1, wobei das organisches Peroxid-Vernetzungsmittel ein organisches Peroxid-Vernetzungsmittel mit einer 1 Minuten-Halbwertszeit-Temperatur von über 160°C umfasst.

8. Geschäumtes Ethylen-Propylen-Diengummimaterial gemäß Anspruch 1, wobei das organisches Peroxid-Vernetzungsmittel in einer Menge von 0,05 bis 20 Gewichtsteile, bezogen auf 100 Gewichtsteile des Ethylen-Propylen-Dienkautschuks, enthalten ist.

9. Geschäumtes Ethylen-Propylen-Diengummimaterial gemäß Anspruch 1, wobei die Kautschukzusammensetzung ferner Thiazole und Thioharnstoffe als einen Vemetzungsbeschleuniger umfasst.

10. Geschäumtes Ethylen-Propylen-Diengummimaterial gemäß Anspruch 1, wobei die Kautschukzusammensetzung ferner ein Azo-Schäumungsmittel umfasst.

## Revendications

1. Matériau expansé de caoutchouc éthylène-propylène-diène, obtenu en expansant une composition de caoutchouc comprenant un caoutchouc éthylène-propylène-diène, un agent de réticulation quinonique et un agent de réticulation peroxyde organique.

2. Matériau expansé de caoutchouc éthylène-propylène-diène selon la revendication 1, dans lequel la teneur en diènes dans le caoutchouc éthylène-propylène-diène est dans la gamme de 3 à 20 % en poids.

3. Matériau expansé de caoutchouc éthylène-propylène-diène selon la revendication 1, dans lequel l'agent de réticulation quinonique comprend de la p-quinonedioxime.

4. Matériau expansé de caoutchouc éthylène-propylène-diène selon la revendication 3, dans lequel l'agent de réticulation quinonique comprend en outre de la p,p'-dibenzoyl quinonedioxime.

5. Matériau expansé de caoutchouc éthylène-propylène-diène selon la revendication 3, dans lequel la p-quinonedioxime est contenue en une quantité de 0,05 à 2 parties en poids pour 100 parties en poids du caoutchouc éthylène-propylène-diène.

6. Matériau expansé de caoutchouc éthylène-propylène-diène selon la revendication 4, dans lequel la p,p'-dibenzoyl quinonedioxime est contenue en une quantité de 0,05 à 10 parties en poids pour 100 parties en poids du caoutchouc éthylène-propylène-diène.

7. Matériau expansé de caoutchouc éthylène-propylène-diène selon la revendication 1, dans lequel l'agent de réticulation peroxyde organique comprend un agent de réticulation peroxyde organique ayant une température de demi-vie à 1 minute au-dessus de 160 °C.

8. Matériau expansé de caoutchouc éthylène-propylène-diène selon la revendication 1, dans lequel l'agent de réticulation peroxyde organique est contenu en une quantité de 0,05 à 20 parties en poids pour 100 parties en poids du caoutchouc éthylène-propylène-diène.

9. Matériau expansé de caoutchouc éthylène-propylène-diène selon la revendication 1, dans lequel la composition de caoutchouc comprend en outre des thiazoles et des thiourées en tant qu'accélérateur de réticulation.

10. Matériau expansé de caoutchouc éthylène-propylène-diène selon la revendication 1, dans lequel la composition de caoutchouc comprend en outre un agent d'expansion azoïque.
